# EUROPÄISCHE PATENTSCHRIFT

(11) **EP 0 446 716 B1**
(45) Veröffentlichungstag und Bekanntmachung des Hinweises auf die Patenterteilung: **24.08.1994**
(21) Anmeldenummer: 91103066.6
(22) Anmeldetag: 01.03.1991
(51) Int. Cl.: A21C 3/02, F16H 9/24

(54) **Teigwalzmaschine mit einstellbarem Getriebe**
Pastry rolling machine with a variable transmission
Machine à rouler la pâte avec une transmission variable

(30) Priorität: 19.04.1990 DE 4012494; 15.03.1990 DE 4008315
(43) Veröffentlichungstag der Anmeldung: 18.09.1991
(73) Patentinhaber: A. FRITSCH GMBH & CO. KG, D-97348 Markt Einersheim (DE)
(72) Erfinder: Bernhardt, Udo, W-8711 Markt Einersheim (DE)
(74) Vertreter: Matschkur, Götz, Lindner Patent- und Rechtsanwälte

(56) Entgegenhaltungen:
- EP-A- 0 084 509
- DE-A- 1 030 788
- DE-A- 1 145 113
- DE-A- 1 169 381
- DE-A- 1 284 373
- DE-A- 1 298 962
- DE-A- 2 030 814
- DE-C- 4 012 494
- DE 3725O90 A1

## Beschreibung

Die Erfindung betrifft eine Teigwalzmaschine, bei der Teig von einem zuführenden Förderer durch den Spalt gegenüberliegender Walzen hindurch zu einem wegführenden Förderer gelangt, und die Förderer mit einem gemeinsamen Antrieb über ein Getriebe mit variierbarer Übersetzung gekoppelt sind, wobei das Getriebe zwischen Antrieb und zuführendem Förderer mehrere voneinander separat einkuppelbare Übertragungsketten aufweist, die mit unterschiedlichen Geschwindigkeitsübersetzungen ausgeführt sind.

Allgemein bekannte Teigwalzmaschinen (vgl. das Modell "COMPASS" der Firma Seewer) weisen beidseitig der Walzen angeordnete Transportbänder (Förderer) auf, die von einem mit der unteren Druckwalze verbundenen Antriebszapfen angetrieben werden, wobei abwechslungsweise ein Transportband als Zuführband und das andere als Wegführband dient. Hierzu ist ein Umschaltgetriebe vorgesehen, welches ein festes Übersetzungsverhältnis zwischen zuführendem und wegtransportierendem Transportband (Förderer) realisiert, was jedoch nur für einen bestimmten Teig-Abwalzbereich brauchbar ist. Jedoch gibt es Teige mit relativ kleinem und auch solche mit relativ großem Abwalzbereich, wie z. B. Mürbteig; infolgedessen kommt man mit nur einem Übersetzungsverhältnis nicht mehr aus. In dieser Hinsicht sind schon verschiedene Getriebeausführungen vorgeschlagen worden, die ein stufenloses Verstellen der Fördergeschwindigkeit des zuführenden Transportbandes ermöglichen. Diese mechanischen Verstellgetriebe haben jedoch den Nachteil, daß sie für das Verstellen durch ein Steuerungssystem, z. B. Mikroprozessorsystem, einen sehr aufwendigen Verstellmechanismus benötigen.

Bei einem bekannten Teigwalzwerk (DE-AS 1 030 788) etwa der eingangs genannten Art wird vorgeschlagen, auf der Hauptantriebswelle einer der beiden Förderwalzen zwei dem Verhältnis der beiden Übersetzungen entsprechende Antriebsräder drehfest anzuordnen, die zueinander ein Durchmesserverhältnis von 2 : 1 aufweisen. Daher wird eine erste Umlenktrommel mit etwa der doppelten Geschwindigkeit wie die weitere, hinter dem Teigspalt befindliche Umlenktrommel angetrieben, was zu einem Verhältnis der Teigdicke vor und hinter dem Walzenspalt von ebenfalls 2 : 1 führt. Bei Drehrichtungsumkehr vertauschen die Förderbänder ihre Rollen, und ebenso kehren alle Zahnräder ihre Bewegungsrichtung um. Auch das Übersetzungsverhältnis wird einfach nur vertauscht.

Ferner ist eine Teigwalzmaschine bekannt (DE-AS 1 169 381), bei der unterschiedliche Geschwindigkeiten für das zufördernde Band ermöglicht sind, indem ein Regelantrieb mit Reibradgetriebe eingesetzt ist. Dadurch soll jedem Walzspaltverhältnis zwischen der beim vorangehenden Walzvorgang und beim momentan ablaufenden Walzvorgang eingestellten Walzspaltbreite ein bestimmtes Übersetzungsverhältnis für den Antrieb des zufördernden Förderbandes zugeordnet werden. Zur Lösung wird eine Konstruktion mit Baukomponenten wie ein in seine Ausgangsstellung zurückkehrendes Kurvenelement, ein Abtaster, ein Regelantrieb mit Verstellglied u.a. vorgeschlagen. Die Förderbandantriebswalzen sind über jeweilige Kettenräder angetrieben, die während des Betriebs stets und zwingend mit einem Kettenrad verbunden sind. Das Kettenrad ist durch seine Welle von einem Kegelradgetriebe angetrieben, das mit dem Antriebsglied eines Reglertriebes gekoppelt ist. Diese Konstruktion ist allerdings recht kompliziert und aufwendig mit vielen Komponenten ausgeführt.

Bei der in DE-A-1 298 962 beschriebenen Antriebs-Übertragungs-Einrichtung für Teigwalzmaschinen sind für das zuführende Teigförderband keine zwei unterschiedlichen Geschwindigkeiten vorgesehen: ein Zahnrad ist mit der Hauptantriebswelle fest verbunden und überträgt den Antrieb über das Umlenkzahnrad nach einem Antriebszahnrad. Je nach der Drehrichtung wird das Antriebszahnrad entweder mit einem ersten Kettenrad oder einem zweiten gekuppelt. Diese Kettenräder werden über ein weiteres Kettenrad angetrieben. Durch die unterschiedliche Größe der Kettenräder wird das Geschwindigkeitsverhältnis der Teigförderbänder (Einlaufseite-Auslaufseite) eingestellt (vgl. Spalte 2, Zeilen 38 - 47 und 64 - 68). Irgendeine Möglichkeit, die Geschwindigkeit des Einlaufförderbandes, unabhängig von der des Auslaufförderbandes, umschalten zu können, ist nicht vorgesehen und nicht ersichtlich.

Die aus dem Dokument EP-A-0 084 509 bekannte Teigwalzmaschine besitzt zwei Walzzylinder mit je einem Zu- bzw. wegführenden Förderband. Diese sind durch ein Motor-Getriebe angetrieben. Um die Geschwindigkeit des zuführenden Förderbandes oder zu verringern, ist ein doppelter Geschwindigkeitsveränderer vorgesehen: Dessen Eingangswelle wird vom Motorgetriebe aus an angetrieben. Eine erste Abtriebswelle ist mit der Antriebswalze des einen Förderers, und eine zweite Abtriebswelle mit der Antriebswalze des anderen Förderers verbunden. Mittels eines einzigen Einstellorgans läßt sich die jeweilige Geschwindigkeit einer der Abtriebswellen stufenlos vermindern, wobei die Geschwindigkeit der anderen Abtriebswelle auf einem vorbestimmten Konstantwert gehalten wird. Will der Benutzer dieser vorbekannten Teigwalzmaschine die Geschwindigkeit, beispielsweise des zuführenden Förderers vermindern, muß er einen Drehknopf betätigen, wodurch das als Zahnstange ausgeführte Einstellorgan verstellt wird. Wegen weiterer Einzelheiten wird in dem Dokument EP-A-0 084 509 auf die Seite 13, Zeile 22 - 37/Seite 14, Zeile 1 - 17 verwiesen.

Nach alledem wird das der Erfindung zugrundeliegende Problem aufgeworfen, bei einer Teigwalzmaschine mit bezüglich eines Walzspaltes zuführendem und abführendem Förderer unterschiedliche Geschwindigskeitsübersetzungen zwischen dem Antrieb und dem zuführenden Förderer zu realisieren. Zur Lösung sind bei einer Teigwalzmaschine mit den eingangs genannten Merkmalen erfindungsgemäß eine (zum Antrieb gehörende) Antriebswelle und eine von dieser mit unterschiedlicher Drehzahl getriebene, zusätzliche Zwischen- bzw. Vorgelegewelle vorgesehen, wobei durch Einkuppeln einer der Übertragungsketten der zuführende Förderer mit der Drehgeschwindigkeit entweder der Antriebs- oder der Vorgelegewelle koppelbar ist. Die Vorgelegewelle wird also vom Antrieb bzw. der Antriebswelle mit von dessen Drehzahl abweichender Drehzahl getrieben. Je nach Teigart kann dann eine mit der Antriebswelle oder mit der Vorgelegewelle verbundene Übertragungskette betätigt, eingekuppelt bzw. eingeschaltet werden. Damit wird insbesondere der Vorteil erzielt, daß die Teigwalzmaschine einerseits einen großen Anwendungsbereich und andererseits konstruktiv einfach, robust und zuverlässig ausgeführte Getriebe-Verstellmechanismen aufweist. Der Weg des stufenlosen Verstellens der Fördergeschwindigkeit des zuführenden Bandes ist dabei verlassen. Stattdessen wird zur Anpassung des Abwalzbereiches an die jeweilige Teigart ein mehrstufiges Getriebe verwendet, das sowohl feine als auch grobe Abwalzbereiche abdecken kann. Hierzu dienen die nebeneinander angeordneten Getriebeübertragungsketten von Antrieb zu zuführendem Förderer, die je nach Option und Anpassung an die Teigart einschaltbar sind. In praktischen Versuchen haben sich bereits zwei Übersetzungsstufen als ausreichend erwiesen.

Desweiteren stellt sich das Problem, mit einem derartigen Getriebe den sogenannten Schneidegang realisieren zu können, bei dem ein fertig ausgerolltes Teigband in gleichmäßigen Zeit- und/oder Längsintervallen geschnitten wird. Dazu müssen sich der zuführende und der wegführende Förderer miteinander synchron bzw. mit gleicher Geschwindigkeit in die gleiche Längsrichtung bewegen, wobei sich auf dem wegführenden Transportband eine Schneideinrichtung befindet, mit dem das ausgerollte Teigband geschnitten wird. Diesen Gesichtspunkten trägt eine Weiterbildung der Erfindung Rechnung, nach der eine weitere, vom Antrieb über den weg- oder zuführenden Förderer zum zu- bzw. wegführenden Förderer verlaufende Getriebeübertragungskette mit zueinander reziproken Übersetzungen einerseits vom Antrieb zum erstgenannten Förderer und andererseits von diesem zum zweitgenannten Förderer. Durch die zueinander reziproken Übersetzungen zwischen den beiden hintereinander folgenden Übertragungskettenabschnitten ist eine einheitliche Geschwindigkeit für zu- und wegführenden Förderer gewährleistet. Die reziproken Übersetzungen können beispielsweise durch entsprechende Verhältnisse der Durchmesser von miteinander in Eingriff stehenden Zahnrädern, Riemenscheiben od. dgl. des Getriebes realisiert sein.

Zur Ausführung des Getriebes bei Teigwalzmaschinen sind Riemengetriebe zweckmäßig. Um in dieser Hinsicht antriebsseitig Abgriffspunkte für Leistung, Drehzahl und/oder Drehmoment zu schaffen, die flexibel verwendbar sind, besteht eine Weiterbildung der Erfindung darin, daß mit der Antriebswelle und mit der Vorgelegewelle je zwei Riemenscheiben verbunden sind, und zwar jeweils paarweise starr (gegenüber der Welle unbeweglich) und ankuppelbar an die Welle. Ferner sind bei dieser Ausführung die starr verbundenen, insbesondere auf der Welle fest angebrachten Riemenscheiben gemeinsam mit dem wegführenden Förderer gekoppelt, während die anderen ankuppelbaren Riemenscheiben jeweils mit dem zuführenden Förderer koppelbar sind. Hierdurch sind einerseits feste Übersetzungsverhältnisse zwischen Antrieb und wegführendem Förderer und andererseits variierbare Übersetzungsverhältnisse zwischen Antrieb und zuführendem Förderer gegeben. Gleichzeitig besteht die Möglichkeit, eine Getriebeübertragungskette vom Antrieb über wegführenden Förderer und den notwendigen Koppelgliedern zum zuführenden Förderer zu schaffen, im Sinne des obengenannten Schneidegangs.

Auf der Getriebeausgangsseite, d. h. im Bereich der Abtriebswelle des Förderers sind in weiterer Ausbildung der Erfindung mit der Förderer-Abtriebswelle eine Riemenscheibe in eine Drehrichtung freilaufend (Einweg-Freilauf) und eine andere Riemenscheibe ankuppelbar verbunden, und beide Riemenscheiben mit dem Antrieb gekoppelt und/oder koppelbar ausgeführt, gegebenenfalls über zwischengeschaltete Übertragungsglieder bzw. -ketten. Eine spezielle, im Rahmen der Erfindung liegende Realisierungsmöglichkeit der gegenseitigen Kopplung von antriebsseitigen und abtriebsseitigen Riemenscheiben besteht wie folgt: die freilaufende Riemenscheibe der Abtriebswelle ist mit den starr mit Antriebs- und Vorgelegewelle verbundenen Riemenscheiben, und die ankuppelbare Riemenscheibe der Abtriebswelle mit den jeweils ankuppelbaren Riemenscheiben von Antriebs- und Vorgelegewelle gekoppelt und/oder koppelbar ausgeführt. Ist darüber hinaus das für den Freilauf notwendige Freilaufelement für die mit der Förder-Abtriebswelle verbundene Riemenscheibe derart ausgeführt, daß eine Kopplung mit dem Antrieb nur bei von den Walzen wegführender Förderrichtung, also nur bei wegführendem Förderer erfolgt, kann ohne weiteres über die zur freilaufenden Riemenscheibe parallele ankuppelbare Riemenscheibe an der Abtriebswelle des wegführenden Förderers eine Übertragung zum zuführenden Förderer zur Realisierung des Schneide- bzw. Synchrongangs stattfinden.

Zur Kopplung der genannten Riemenscheiben zwecks Herbeiführung der Getriebeübertragungsketten sind diese jeweils von einem gemeinsamen Treibriemen umfaßt: so können die starr mit der Antriebs- und der Vorgelegewelle verbundenen Riemenscheiben und die mit der Förderer-Abtriebswelle (einweg-)freilaufende Riemenscheibe einerseits und/oder alle kuppelbaren Riemenscheiben der Antriebs-, Vorgelege- und Förderer-Abtriebswelle in jedem Fall über einen gemeinsamen Treibriemen miteinander gekoppelt sein. Durch Betätigung der einzelnen Kupplungen in bestimmten Kombinationen können dadurch unterschiedliche Getriebeübertragungsketten realisiert werden, beispielsweise die obengenannte zur Herbeiführung des Schneide- bzw. Synchrongangs oder auch Übertragungsketten direkt vom Antrieb zum zuführenden Förderband mit wählbaren Übersetzungen. So kann in besonders vorteilhafter Ausbildung der Erfindung die Kopplung der Abtriebswelle des zuführenden Förderers mit dem Antrieb über (ausschließlich) ein oder mehrere ein-/auskuppelbare Riemenscheiben erfolgen.

Weitere Einzelheiten, Merkmale und Vorteile der Erfindung ergeben sich aus der nachfolgenden Beschreibung eines besonders vorteilhaften Ausführungsbeispiels der Erfindung sowie anhand der Zeichnung. Darin zeigen:
- Fig. 1: eine ausschnittsweise Teilansicht auf den mittleren, die Walzenanordnung umfassenden Teil einer Teigwalzmaschine mit erfindungsgemäßem Getriebe,
- Fig. 2: eine Schnittansicht etwa nach der Linie II-II in Fig. 1, und
- Fig. 3: eine Schnittansicht etwa nach der Linie III-III in Fig. 1.

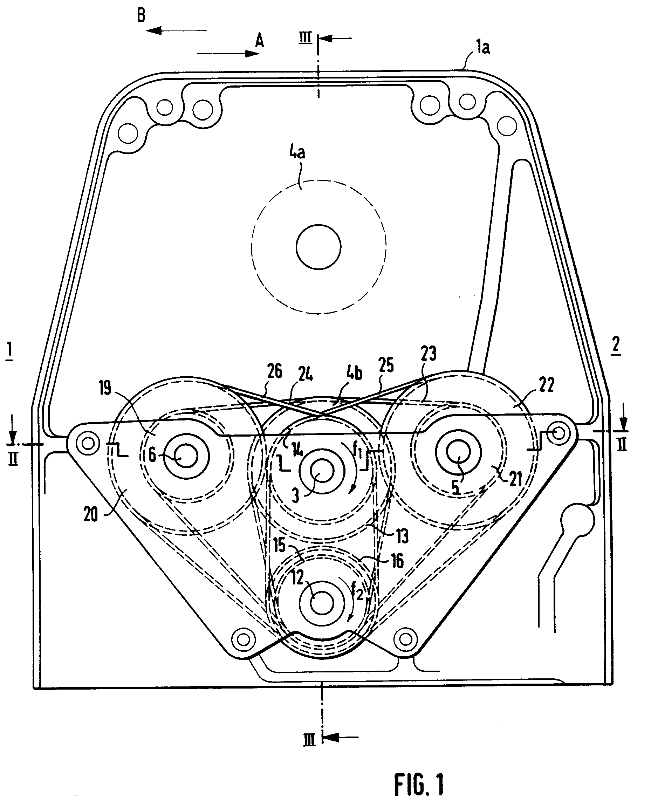

Bei einer üblichen Teigwalzanordnung (vgl. z. B. DE-Offenlegungsschrift 37 25 090 und insbesondere dortige Fig. 1) ist gemäß Fig. 1 das erfindungsgemäße Getriebe innerhalb eines Walzwerkgehäuses 1a untergebracht, zu dessen beiden Seiten sich zu- und wegführende Förderer (Transportbänder) 1, 2 (nur symbolisch mit Bezugsziffern angedeutet) erstrecken. In dem Walzwerkgehäuse 1a sind gegenüberliegende Druckwalzen 4a, 4b aufgehängt, deren zwischenliegender Spalt zum Teigwalzen verstellbar ist. Die in der Zeichnung untere Teigwalze 4b besitzt eine Antriebswelle 3 mit vorspringendem Zapfen, die parallel zur Längsrichtung der Walzen 4a, 4b verläuft. In gleicher Weise und von der Antriebswelle 3 beabstandet sind Abtriebswellen 5, 6 mit vorspringenden Abtriebsbolzen vorgesehen, die je einem der Förderer die Förderbewegungen in Richtungen A, B erteilen. Die Antriebs- und Abtriebswellen 3, 5, 6 sind miteinander durch das nachstehend erläuterte Getriebe in Form eines Riementriebs gekoppelt.

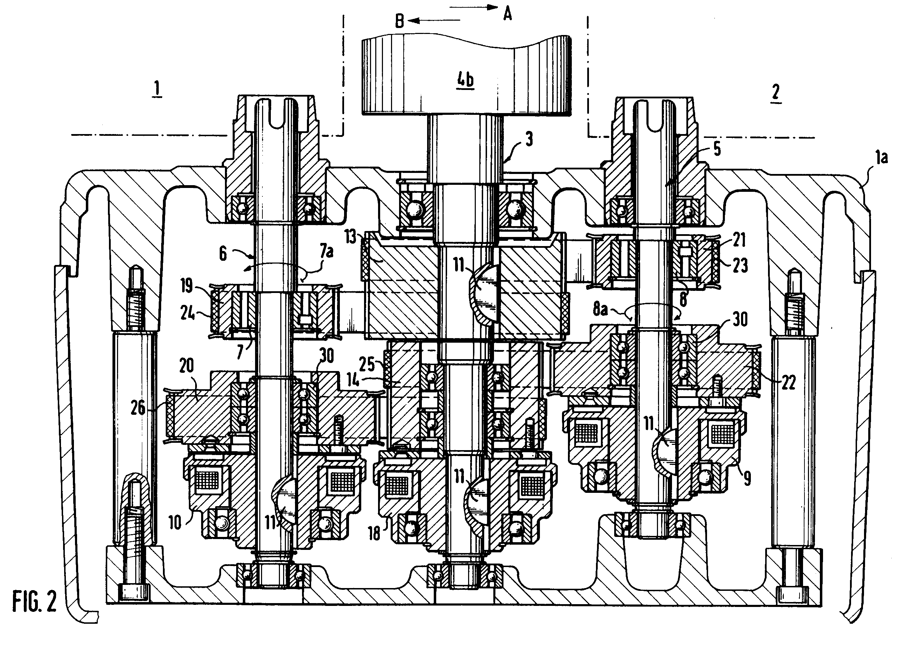

Hierzu sind gemäß Fig. 2 die zu je einem Förderer 1, 2 gehörenden Abtriebswellen 5 bzw. 6 je mit einem Freilaufelement 8 bzw. 7 versehen, die je mit einer Riemenscheibe 21 bzw. 19 verbunden sind. Hierdurch werden die Abtriebswellen 5, 6 und deren zugehörige drehbare Riemenscheiben 21 bzw. 19 jeweils in einem einzigen Drehsinn relativ zueinander gekuppelt, während bei entgegengesetztem Drehsinn die genannten Teile selbsttätig voneinander gelöst werden. Im vorliegenden Beispiel ist der durch die Freilaufelemente 7, 8 herbeigeführte Drehsinn 7a, 8a stets von den Walzen 4 weggerichtet, so daß diese eine Bewegung der Förderer 1, 2 nur in deren von den Walzen 4a, 4b wegführender Richtung bewerkstelligen können.

Desweiteren sind gemäß Fig. 2 auf den Abtriebwellen 5, 6 je eine Elektromagentkupplung 9 bzw. 10 vorgesehen, die auf ihren zugehörigen Wellen mittels Paßfedern 11 in festem formschlüssigen Eingriff aufgesteckt sind. Die Elektromagnetkupplungen 9, 10 wirken auf die entsprechende Abtriebswelle 5, 6 jeweils koaxial umgebende Riemenscheiben 22, 20, die über Kugellager 30 auf der Antriebswelle 5, 6 drehbar gelagert sind. Bei (externer) Betätigung der Elektromagnetkupplungen 9, 10 wird jeweils ein Form- bzw. Kraftschluß der Riemenscheiben 22, 20 mit den Abtriebswellen 5 bzw. 6, mithin eine Kopplung mit deren Wellendrehungen herbeigeführt.

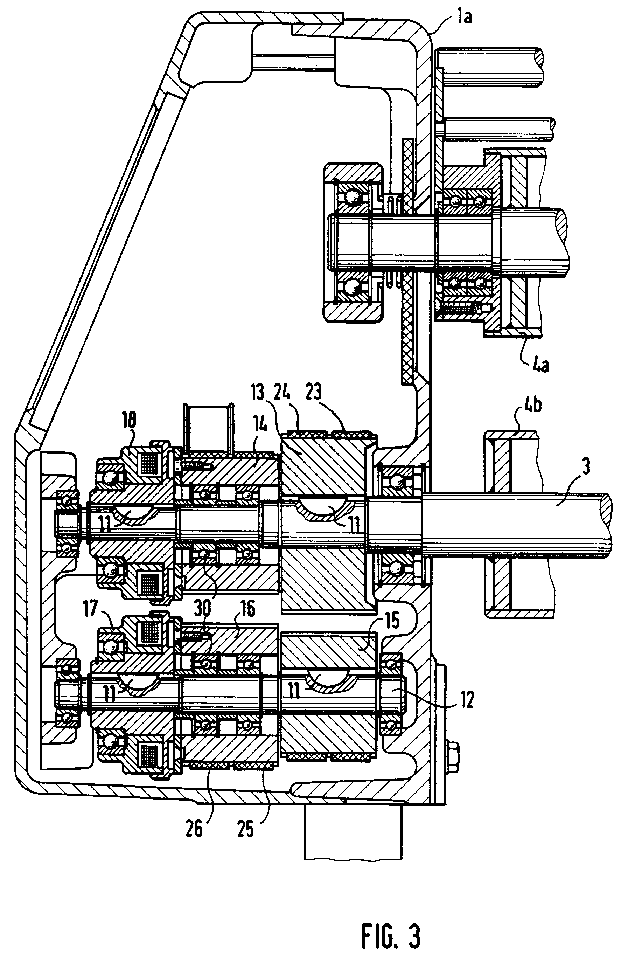

Wie aus Figuren 1 und 3 ersichtlich, erstreckt sich im gezeichneten Beispiel unterhalb der Antriebswelle 3 eine parallele Vorgelegewelle 12. Auf die Antriebswelle 3 ist form- bzw. kraftschlüssig mittels einer Paßfeder 11 eine erste Riemenscheibe 13 und dazu benachbart eine weitere Riemenscheibe 14 mit im Vergleich kleinerem Durchmesser aufgesetzt; letztere Riemenscheibe 14 ist über Kugellager 30 drehbar gelagert und wird von einer ebenfalls auf die Antriebswelle 3 aufgesteckten Elektromagnetkupplung 18 beaufschlagt. Diese steht über eine Paßfeder 11 form- bzw. kraftschlüssig in Eingriff mit der Antriebswelle 3. In entsprechender Weise ist die Vorgelegewelle 12 mit einer mittels Paßfeder 11 form- bzw. kraftschlüssig aufgesteckten ersten Riemenscheibe 15 und einer weiteren, mittels Kugellager 30 drehbar aufgesetzten Riemenscheibe 16 versehen; letztere ist gegenüber der erstgenannten Riemenscheibe 15 im Durchmesser vergrößert. Sie wird von einem weiteren Elektromagneten 17 beaufschlagt, der in kraft- bzw. formschlüssigen Eingriff aufgrund der Paßfeder 11 auf der Vorgelegewelle 12 sitzt. Bei Betätigung der genannten Elektromagnetkupplungen 18, 17 werden die damit jeweils in Wirkungsverbindung stehenden Riemenscheiben 14, 16 mit etwaigen Drehbewegungen der Antriebswelle 3 bzw. der Vorgelegewelle 12 gekoppelt. Wie insbesondere aus Fig. 1 ersichtlich, sind gemäß gezeichnetem Ausführungsbeispiel jeweils drei Riemenscheiben durch einen gemeinsamen Riemen wie folgt verbunden: Ein erster Zahnriemen 23 umfaßt die beiden auf der Antriebswelle 3 und der Vorgelegewelle 12 jeweils starr bzw. formschlüssig angebrachten Riemenscheiben 13, 15 sowie die auf der Abtriebswelle 5, die zum in Fig. 1 rechts dargestellten Förderer 2 gehört, einwegfreilaufend angebrachte Riemenscheibe 21. Die auf der Antriebswelle 3 starr befestigte Riemenscheibe 13 besitzt gegenüber der auf der Vorgelegewelle 12 starr befestigten Riemenscheibe 15 größeren Durchmesser, so daß sie bei Antrieb mit einer kleineren Drehzahl f₁ als die Drehzahl f₂ der auf der Vorgelegewelle 12 starren Riemenscheibe 15 rotiert. Bei Antrieb im für f1, f2 gezeichnetem Drehsinn wird der zugehörige Förderer 2 in Transportrichtung A von den Walzen 4a, 4b wegführend betrieben. Ein zweiter Treibriemen 24 umfaßt dieselben Riemenscheiben 13, 15 wie der erstgenannte Treibriemen 23, jedoch noch die freilaufende Riemenscheibe 19 des anderen (in der Zeichnung linken) Förderers 1. Ein dritter Treibriemen 25 umläuft die auf der Antriebswelle 3 und der Vorgelegewelle 12 jeweils durch die Elektromagnetkupplungen 18, 17 an die Wellen koppelbaren Riemenscheiben 14, 16, sowie eine auf der einen Vorgelegewelle 5 angeordnete elektromagnetisch kuppelbare Riemenscheibe 22. Analog umfaßt ein vierter Treibriemen 26 die beiden soeben genannten koppelbaren Riemenscheiben auf der Antriebs- und der Vorgelegewelle 12 sowie die auf der anderen Abtriebswelle 6 angeordnete, elektromagnetisch kuppelbare Riemenscheibe 20. Mithin verbinden die beiden letztgenannten Treibriemen 25, 26 jeweils drei über Elektromagnetkupplungen zuschaltbare Riemenscheiben 14, 16, 22 bzw. 14, 16, 20.

Zu erwähnen ist noch, daß auf den Abtriebswellen 5, 6 die elektromagnetisch zuschaltbaren Riemenscheiben 22, 20 jeweils größeren Durchmesser haben, als deren benachbarte, einweg-freilaufende Riemenscheiben 21, 19.

Ergänzend wird noch die Funktionsweise der erfindungsgemäßen Getriebeanordnung näher erläutert, wobei die nicht eingeklammerten Bezugszeichen für den Fall, daß die Förderer 1, 2 sich in Transportrichtung A von links nach rechts gemäß Fig. 1 und die eingeklammerten Bezugszeichen für den Fall gelten, daß sich die Förderer 1, 2 in Transportrichtung B von rechts nach links gemäß Fig. 1 bewegen.

Die Antriebswelle 3, die zweckmäßig vom gleichen Antrieb wie die untere Druckwalze 4b angetrieben wird, treibt über die starr befestigte Riemenscheibe 13 den Treibriemen 23 (24), welcher seinerseits die Vorgelegewelle 12 über deren starrer Riemenscheibe 15 sowie die Abtriebswelle 5 des rechten Förderers 2 über deren einweg-freilaufend gekoppelter Riemenscheibe 21 rotiert. Die Drehzahlübersetzung zwischen der Antriebswelle 3 und der zum rechten Förderer 2 gehörigen Abtriebswelle 5 wird durch das Verhältnis der Durchmesser von deren entsprechenden Riemenscheiben 13, 21 bestimmt. Der rechte Förderer 2 ist in dem gezeichneten Drehsinn von Antriebs- und Vorgelegewelle 3, 12 der wegführende Förderer. Umgekehrt ist der andere, links dargestellte Förderer 1 (2) der zuführende Förderer, indem seine Abtriebswelle 6 (5) über dessen mittels Elektromagnet 10 (9) angekuppelte Riemenscheibe 20 (22) vom Treibriemen 26 (25) rotiert wird. Die weitere auf der Abtriebswelle 6 (5) aufgesteckte Riemenscheibe 19 (21) läuft frei bzw. leer, d. h. ist wirkungslos infolge der Einwirkung des Freilaufglieds 7 (8). Die auf der Antriebswelle 3 und der Vorgelegewelle 12 jeweils mittels Elektromagneten 18, 17 ankuppelbaren Riemenscheiben 14 bzw. 16 laufen - bei Betätigung der entsprechenden Elektromagneten 18, 17 - mit unterschiedlichen Drehzahlen, weil aufgrund der unterschiedlichen Durchmesser der starren Antriebswellen-Riemenscheibe 14 und der starren Vorgelegewellen-Riemenscheibe 15 deren gemeinsame, vom Treibriemen 23 (24) übertragene Bahngeschwindigkeit in unterschiedliche Winkelgeschwindigkeiten bzw. Drehzahlen f1, f2 übersetzt wird: Die Drehzahl f1 der Antriebswelle 3 ist kleiner als die Drehzahl f₂ der Vorgelegewelle 12. Wird die auf der Antriebswelle 3 befindliche Elektromagnetkupplung 18 betätigt, wird die zugehörige Riemenscheibe 14 angekuppelt und treibt über den Treibriemen 26 (25) die Abtriebswelle 6 (5) des zuführenden Förderers 1 (2) mit der langsameren Drehzahl f₁. Zum Umschalten des Getriebes auf die schnellere Zuführgeschwindigkeit für den Förderer 1 (2) ist die auf der Antriebswelle 3 befindliche Elektromagnetkupplung 18 zu lösen und die auf der Vorgelegewelle 12 befindliche Elektromagnetkupplung 17 zu betätigen, so daß die ankuppelbare Antriebswellen-Riemenscheibe 14 mangels Kupplung leerläuft, während die ankuppelbare Vorgelegewellen-Riemenscheibe 16 mit der langsameren Drehzahl f₂ der Vorgelegewelle 12 gekoppelt wird und diese über den Treibriemen 26 (25) auf die Abtriebswelle 6 (5) des zuführenden Förderers 1 (2) überträgt. Zum Antrieb des zuführenden Förderers 1 (2) müssen also die Elektromagnetkupplungen 10 (9) auf der Abtriebswelle 6 (5) sowie eine der beiden Elektromagnetkupplungen 17, 18 entweder auf der Antriebswelle 3 oder der Vorgelegewelle 12 betätigt sein. Durch das Anziehen der Kupplung 18 auf der Antriebswelle 3 wird der zuführende Förderer 1 (2) mit der langsamen, durch das Anziehen der Kupplung 17 auf der Vorgelegewelle mit der schnellen Geschwindigkeit angetrieben.

Zur Realisierung des Synchrongangs bzw. Schneidegangs, bei dem die Geschwindigkeit der beiden zuführenden bzw. wegführenden Förderer 1, 2 gleich sein muß, befindet sich auf dem wegführenden Förderer 2 (1) eine Schneideinrichtung (nicht gezeichnet), mit dem ein ausgerolltes Teigband geschnitten wird. Hierzu dürfen nur die beiden Elektromagnetkupplungen, die sich je auf einer der Abtriebswellen 5, 6 der beidseitigen Förderer 1, 2 befinden, betätigt sein. Die anderen Elektromagentkupplungen 18, 17 je auf der Antriebswelle 3 und der Vorgelegewelle 12 sind nicht betätigt und ermöglichen infolgedessen einen Freilauf der ihnen zugeordneten Riemenscheiben 14, 16 in jeder Drehrichtung. Diese können so als Koppelglieder für die Übertragung von Drehzahl, Drehmoment usw. zwischen den beiden Abtriebswellen 5, 6 dienen. Die Antriebsleistung wird wieder über die Antriebswelle 3 eingeleitet und durch deren starre Riemenscheibe 13, den darauf aufgebrachten Treibriemen 23 (24), der einweg-gleichlaufenden Riemenscheibe 21 (19), dem Freilaufglied 8 (7) auf die Abtriebswelle 5 (6) des wegführenden Förderers 2 (1) übertragen. Von der Abtriebswelle 5 (6) wird die Antriebsleistung mittels der Elektromagnetkupplung 9 (10) abgegriffen und auf die ankuppelbare Riemenscheibe 22 (20) gekoppelt. Diese überträgt die Antriebsleistung durch den umlaufenden Treibriemen 25 (26) auf die nicht angekuppelte Riemenscheibe 14, die mangels Kupplung auf der Antriebswelle 3 sich frei drehen kann. Hiervon gelangt die Antriebsleistung über den Treibriemen 26 (25) auf die Riemenscheibe 20 (22) der Abtriebswelle 6 (5) des zuführenden Förderers 1 (2). Da wie ausgeführt die Elektromagnetkupplung 10 (9) betätigt sein muß, sind die Riemenscheibe 20 (22) und die Antriebswelle 6 (5) des zuführenden Förderers 1 (2) miteinander bewegungsstarr gekoppelt zur Übertragung der Drehbewegungen. Aufgrund der Symmetrie, in der die Übertragungsketten und Getriebeglieder für jeden Förderer 1 (2) beidseits des Antriebs 3, 12 ausgeführt sind, und der damit einhergehenden reziproken Übersetzungen der einzelnen Getriebeglieder ist eine gleiche Transportgeschwindigkeit sowohl für den zuführenden Förderer 1 (2) als auch für den wegführenden Förderer 2 (1) gewährleistet.

Die Elektromagentkupplungen sind leicht extern durch Schalter und/oder Mikroprozessorsysteme betätigbar bzw. ansteuerbar. Die Erfindung ist nicht auf das genannte Ausführungsbeispiel beschränkt. So können die aufgezeigten Getriebeübertragungsketten nicht nur durch Riementriebe, sondern auch durch Zahnräder, oder andere Getriebebauarten realisiert sein.

## Patentansprüche

1. Teigwalzmaschine, bei der Teig von einem zuführenden Förderer (1, A) durch den Spalt gegenüberliegender Walzen (4a, 4b) hindurch zu einem wegführenden Förderer (2, A) gelangt, und die Förderer (1, 2) mit einem gemeinsamen Antrieb (3) über ein Getriebe mit variierbarer Übersetzung gekoppelt sind, wobei das Getriebe zwischen Antrieb und zuführendem Förderer mehrere voneinander separat einkuppelbare Übertragungsketten (14 - 20, 16 - 20) aufweist, die mit unterschiedlichen Geschwindigkeitsübersetzungen (f₁, f₂) ausgeführt sind, gekennzeichnet durch eine Antriebswelle (3) und eine von dieser mit unterschiedlicher Drehzahl (f₂) getriebene Vorgelegewelle (12), wobei durch Einkuppeln einer der Übertragungsketten (14 - 20, 16 - 20) der zuführende Förderer (1, A) mit der Drehgeschwindigkeit (f1, f2) entweder der Antriebs- oder der Vorgelegewelle (3, 12) koppelbar ist.

2. Teigwalzmaschine nach Anspruch 1, gekennzeichnet durch eine weitere, vom Antrieb (3) über den weg- oder zuführenden Förderer (2, 1) zum zu- bzw. wegführenden Förderer ( 1, 2) verlaufende Getriebeübertragungskette (13-21-22-14-20) mit zueinander reziproken Übersetzungen vom Antrieb (3) zum erstgenannten Förderer (2) und von diesem zum zweitgenannten Förderer (1).

3. Teigwalzmaschine nach Anspruch 1 oder 2, wobei das Getriebe ganz oder teilweise als Riementrieb ausgeführt ist, dadurch gekennzeichnet, daß mit der Antriebswelle (3) und der Vorgelegewelle (12) je zwei Riemenscheiben (13, 14, 15, 16) einerseits starr und andererseits ankuppelbar verbunden sind, wobei die starr verbundenen Riemenscheiben (13, 15) gemeinsam mit dem wegführenden Förderer (2, A) gekoppelt und die ankuppelbaren Riemenscheiben (14, 16) jeweils mit dem zuführenden Förderer (1, A) koppelbar sind.

4. Teigwalzmaschine nach einem der vorherigen Ansprüche, wobei das Getriebe ganz oder teilweise als Riementrieb ausführt ist, dadurch gekennzeichnet, daß mit der Förderer-Abtriebswelle (5, 6) eine Riemenscheibe (21, 19) in eine Drehrichtung freilaufend und eine andere Riemenscheibe (22, 20) ankuppelbar verbunden, und beide Riemenscheiben mit dem Antrieb (3) gekoppelt und/oder koppelbar sind.

5. Teigwalzmaschine nach Anspruch 3 und 4, dadurch gekennzeichnet, daß die freilaufende Riemenscheibe (21, 19) der Abtriebswelle (5, 6) und die starr mit Antriebs- und Vorgelegewelle (3, 12)) verbundenen Riemenscheiben (13, 15) miteinander sowie die ankuppelbaren Riemenscheiben (14, 16, 22, 20) von Antriebs-, Vorgelege- und Abtriebswelle (3, 12, 5, 6) miteinander gekoppelt und/oder koppelbar sind.

6. Teigwalzmaschine nach Anspruch 4 oder 5, gekennzeichnet durch ein derart ausgebildetes Freilaufelement (8, 7) für die mit der Förderer-Abtriebswelle (5, 6) verbundene Riemenscheibe (21, 19), daß eine Kupplung mit dem Antrieb (3) nur bei von den Walzen (4a, 4b) wegführender Förderrichtung (7a, 8a) erfolgt.

7. Teigwalzmaschine nach einem der vorherigen Ansprüche, mindestens jedoch nach den Ansprüchen 3 und 4, dadurch gekennzeichnet, daß die starr mit der Antriebs- und der Vorgelegewelle (3, 12) verbundenen Riemenscheiben (13, 15) und die mit der Förderer-Abtriebswelle (5, 6) einwegfreilaufende Riemenscheibe (21, 19) und/oder die kuppelbar (9, 10, 17, 18) mit der Antriebs-, Vorgelege- und Förderer-Abtriebswelle (3, 12, 5, 6) verbundenen Riemenscheiben (14, 16, 20, 22) jeweils von einem gemeinsamen Treibriemen (23, 24, 25, 26) umfaßt sind.

8. Teigwalzmaschine nach einem der vorherigen Ansprüche, mindestens jedoch nach Anspruch 4, dadurch gekennzeichnet, daß die Kopplung der Abtriebswelle (5, 6) des zuführenden Förderers (1, A, 2, B) mit dem Antrieb (3) über ein oder mehrere ein-/auskuppelbare Riemenscheiben (14, 16, 20, 22) erfolgt.

## Claims

1. Dough-rolling machine, in which dough from a supplying conveyor (1, A) passes through the gap of opposing rollers (4a, 4b) to a discharging conveyor (2, A), and the conveyors (1, 2) are coupled to a common drive (3) via a mechanism with variable gearing, the mechanism comprising between the drive and the supplying conveyor a plurality of transmission chains (14 - 20, 16 - 20) capable of being engaged separately and having different speed ratios (f₁, f₂), characterised by an input shaft (3) and a transmission shaft (12) driven at a different speed (f₂), wherein by the engagement of one of the transmission chains (14 - 20, 16 - 20), the supplying conveyor (1, A) with the speed of rotation (f1, f2) can be coupled either to the input shaft or to the transmission shaft (3, 12).

2. Dough-rolling machine according to claim 1, characterised by a further transmission chain (13-21-22-14-20) extending from the drive (3) via the supplying or discharging conveyor (2, 1) to the supplying or discharging conveyor (1, 2), said transmission chain having reciprocal gear ratios from the drive (3) to the first conveyor (2) and from that conveyor to the second conveyor (1).

3. Dough-rolling machine according to claim 1 or 2, wherein the mechanism is formed wholly or partly as a belt drive, characterised in that two pulleys (13, 14, 15, 16) in each case are connected to the input shaft (3) and the intermediate shaft (12), rigidly in the one case and engageably in the other, the rigidly connected pulleys (13, 15) being coupled in common to the discharging conveyor (2, A) and the engageable pulleys (14, 16) each being couplable to the supplying conveyor (1, A).

4. Dough-rolling machine according to one of the preceding claims, wherein the mechanism is formed wholly or partly as a belt drive, characterised in that one pulley (21, 19) is connected to the conveyor output shaft (5, 6) so as to freewheel in one direction, and another pulley (22, 20) is connected to the conveyor output shaft (5, 6) in an engageable manner, and both pulleys are coupled and/or couplable to the drive (3).

5. Dough-rolling machine according to claim 3 and 4, characterised in that the freewheeling pulley (21, 19) of the output shaft (5, 6) and the pulleys (13, 15) connected rigidly to the input and transmission shafts (3, 12) are coupled and/or couplable together and the engageable pulleys (14, 16, 22, 20) of the input shaft, transmission shaft and output shaft (3, 12, 5, 6) are coupled and/or couplable together.

6. Dough-rolling machine according to claim 4 or 5, characterised by a freewheeling element (8, 7) for the pulley (21, 19) connected to the conveyor output shaft (5, 6) and constructed in such a manner that coupling to the drive (3) takes placed only if the direction of conveying (7a, 8a) is away from the rollers (4a, 4b).

7. Dough-rolling machine according to one of the preceding claims, but at least according to claims 3 and 4, characterised in that the pulleys (13, 15) rigidly connected to the input and transmission shafts (3, 12) and the pulley (21, 19) freewheeling in one direction with the conveyor output shaft (5, 6) and/or the pulleys (14, 16, 20, 22) connected in an engageable manner (9, 10, 17, 18) to the input shaft, transmission shaft and conveyor output shaft (3, 12, 5, 6) are each encompassed by a common transmission belt (23, 24, 25, 26).

8. Dough-rolling machine according to one of the preceding claims, but at least according to claim 4, characterised in that the coupling of the output shaft (5, 6) of the supplying conveyor (1, A, 2, B) to the drive (3) is effected via one or more engageable/disengageable pulleys (14, 16, 20, 22).

## Revendications

1. Machine à rouler la pâte, dans laquelle de la pâte parvient d'un transporteur d'amenée (1, A), en traversant de la fente formée entre deux rouleaux (4a, 4b) opposés, à un transporteur d'évacuation (2, A), et dans laquelle les transporteurs (1, 2) sont couplés à un dispositif d'entraînement commun (3) par l'intermédiaire d'une transmission à rapport variable, la transmission comprenant, entre le dispositif d'entraînement et le transporteur d'amenée, plusieurs trains de transmission (14 - 20, 16 - 20) pouvant être enclenchés séparément les uns des autres, et qui sont réalisés de manière à présenter des rapports de vitesses (f₁, f₂) différents, caractérisée par un arbre d'entraînement (3) et un arbre intermédiaire (12) entraîné par le précédent avec une vitesse de rotation différente (f2), l'enclenchement de l'une des trains de transmission (14 - 20, 16 - 20) permettant de coupler le transporteur d'amenée (1, A) avec la vitesse de rotation (f₁, f₂), soit de l'arbre d'entraînement (3) soit de l'arbre intermédiaire (12).

2. Machine à rouler la pâte selon la revendication 1, caractérisée par un train de transmission supplémentaire (13 - 21 -22 - 14 -20), qui s'étend du dispositif d'entraînement (3), en passant par le transporteur d'évacuation ou le transporteur d'amenée (2, 1), au transporteur d'amenée ou au transporteur d'évacuation (1, 2), et qui présente des rapports de transmission réciproques entre-eux, du dispositif d'entraînement (3) au transporteur (2) cité en premier et de celui-ci au transporteur (1) cité en second.

3. Machine à rouler la pâte selon la revendication 1 ou 2, la transmission étant réalisée en totalité ou partiellement en tant qu'entraînement à courroies, caractérisée en ce que l'arbre d'entraînement (3) et l'arbre intermédiaire (12) sont chacun reliés à deux poulies de courroie (13, 14, 15, 16), d'une part de manière rigide et d'autre part en étant susceptible d'être accouplés, les poulies de courroie (13, 15) reliées de manière rigide étant couplées en commun avec le transporteur d'évacuation (2, A), et les poulies de courroie (14, 16) susceptibles d'être accouplées pouvant, chaque fois, être couplée au transporteur d'amenée (1, A).

4. Machine à rouler la pâte selon l'une des revendications précédentes, la transmission étant réalisée en totalité ou partiellement en tant qu'entraînement à courroies, caractérisée en ce qu'avec l'arbre de sortie de transporteur (5, 6) sont reliées une poulie de courroie (21, 19) tournant librement dans un sens de rotation et une autre poulie de courroie (22, 20), susceptibles d'être accouplées, et en ce que les deux poulies de courroie sont couplées et/ou peuvent être couplées avec le dispositif d'entraînement (3).

5. Machine à rouler la pâte selon les revendications 3 et 4, caractérisée en ce que la poulie de courroie librement tournante (21, 19) de l'arbre de sortie (5, 6) et les poulies de courroie (13, 15) reliées de manière rigide à l'arbre d'entraînement et à l'arbre intermédiaire (3, 12) sont couplées et/ou peuvent être couplées l'une à l'autre, et les poulies de courroie (14, 16, 22, 20) de l'arbre d'entraînement, de l'arbre intermédiaire et de l'arbre de sortie (3, 12, 5, 6), susceptibles d'être accouplées, sont couplées et/ou peuvent être couplées les unes aux autres.

6. Machine à rouler la pâte selon la revendication 4 ou 5, caractérisée par un élément de roue libre (8, 7) pour la poulie de courroie (21, 19) reliée avec l'arbre de sortie de transporteur (5, 6), la roue libre présentant une configuration telle, qu'il se produit un accouplement avec le dispositif d'entraînement (3) uniquement dans le cas d'une direction de transport (7a, 8a) s'éloignant des rouleaux (4a, 4b).

7. Machine à rouler la pâte selon l'une des revendications précédentes, toutefois au moins selon les revendications 3 et 4, caractérisée en ce que les poulies de courroie (13, 15) reliées de manière rigide avec l'arbre d'entraînement et l'arbre intermédiaire (3, 12), et la poulie de courroie (21, 19) tournant librement dans un sens avec l'arbre de sortie de transporteur (5, 6), et/ou les poulies de courroie (14, 16, 20, 22), reliées avec les arbres d'entraînement, intermédiaire et de sortie de transporteur (3, 12, 5, 6) de manière à pouvoir y être accouplées, sont chaque fois enserrées par une courroie d'entraînement commune (23, 24, 25, 26).

8. Machine à rouler la pâte selon l'une des revendications précédentes, toutefois au moins selon la revendication 4, caractérisée en ce que l'accouplement de l'arbre de sortie (5, 6) du transporteur d'amenée (1, A, 2, B) avec le dispositif d'entraînement (3), s'effectue par l'intermédiaire d'une ou de plusieurs poulies de courroie (14, 16, 20, 22) pouvant être accouplées/désaccouplées.
